Europäisches Patentamt

European Patent Office

Office européen des brevets

(19)

(11) Veröffentlichungsnummer : **0 010 069**
**B2**

(12) # NEUE EUROPÄISCHE PATENTSCHRIFT

(45) Veröffentlichungstag der neuen Patentschrift :
01.10.86

(51) Int. Cl.⁴ : **C 03 C 11/00, C 03 B 19/08**

(21) Anmeldenummer : 79810115.0

(22) Anmeldetag : 04.10.79

(54) Verfahren zur Herstellung eines durch Ofenblähung erzeugten Schaumglas-Granulates.

(30) Priorität : 06.10.78 CH 10440/78

(43) Veröffentlichungstag der Anmeldung :
16.04.80 Patentblatt 80/08

(45) Bekanntmachung des Hinweises auf die Patenterteilung : 01.09.82 Patentblatt 82/35

(45) Bekanntmachung des Hinweises auf die Entscheidung über den Einspruch : 01.10.86 Patentblatt 86/40

(84) Benannte Vertragsstaaten :
AT BE CH DE FR GB IT LU NL SE

(56) Entgegenhaltungen :
CH-A- 499 470
CH-A- 502 964
CH-A- 539 004
DE-A- 2 820 432
DE-C- 1 671 243
FR-A- 2 142 561
US-A- 3 207 588
US-A- 3 321 414
US-A- 4 143 202
Berichte der Akademie des Wissenschaften der UDSSR 1952, Seite 619-621

(73) Patentinhaber : Millcell AG
Brünigstrasse 81
CH-6060 Sarnen (CH)

(72) Erfinder : Vieli, Otto Anton
Casa Vieli
CH-7499 RhäzÜns (CH)

(74) Vertreter : Wann, Ingrid et al
Schmauder & Wann, Patentanwaltsbüro Nidelbadstrasse 75
CH-8038 Zürich (CH)

EP 0 010 069 B2

**Beschreibung**

Die Erfindung betrifft ein Verfahren zur Herstellung von durch Ofenblähung erzeugtem Schaumglas-Granulat.

Es sind bereits Verfahren bekannt (vgl. CH-A 426 601 und 473 741 ; US-A 3 321 414), um aus Glasmehl unter Zusatz eines Blähmittels, welches bei höheren Temperaturen Gas abspaltet, Glasschaum-Granulat herzustellen. Solche Granulate finden vor allem als Leichtbeton-Bestandteil Verwendung. Die Dauer der Wärmebehandlung liegt dabei in der Praxis etwa zwischen 3 und 5 Minuten. Das erhaltene Erzeugniss weist Makroporen auf, deren Zwischenwände mit Mikroporen durchsetzt sind.

Weiter ist auch bereits ein Verfahren zur Herstellung von geschäumten Produkten aus Kieselgel bekannt (vgl. FR-A 2 142 561), bei welchem man Kieselgel ohne Zusatz eines Blähmittels bei 500 bis 900 °C vorbäckt und anschliessend bei 1 000 bis 1 450 °C fertigbäckt. Entsprechend dem verwendeten Rohstoff und der aufwendigeren Herstellung sind die erhaltenen Produkte wesentlich teurer als Schaumglas-Granulate, so dass ihr Einsatz beschränkt ist. Sie finden dort Verwendung, wo aus chemischen oder thermischen Gründen praktisch wasserfreies Siliciumdioxyd benötigt wird.

Durch Versuche wurde nachgewiesen, dass die Druckfestigkeit eines derartigen eingangs erwähnten Schaumglas-Granulates nahezu linear mit der Anzahl der beim Blähen entstandenen Gashohlräume pro Volumeneinheit des Granulates ansteigt. So wurde beispielsweise bei $10^6$ Gashohlräumen pro $cm^3$ eine Druckfestigkeit von 120 kg/$cm^2$, bei $0,3 \cdot 10^6$ Gashohlräumen pro $cm^3$ dagegen nur noch eine solche von 40 kg/$cm^2$ ermittelt.

Aufgabe der Erfindung ist es, ein Verfahren anzugeben, das es erlaubt in einfacher und vorteilhafter Weise ein Glasschaum-Granulat zu schaffen, das gegenüber den bekannten Glasschaum-Granulaten eine wesentlich verbesserte Druckfestigkeit aufweist und sowohl als Füllstoff für Kunststoffe als auch als Leichtbeton-Bestandteil Verwendung finden kann.

Gegenstand der Erfindung ist daher ein Verfahren zur Herstellung eines Schaumglas-Granulates mit

a) einer Korngrösse von 0,2 bis 3 mm ;

b) $10^6$ bis $10^7$ Gashohlräumen pro $cm^3$ Granulatmasse ;

c) einem Schüttgewicht von 100 bis 500 g/Liter ;

d) einem Durchmesser der grössten Gashohlräume von im wesentlichen kleiner als 0,1 mm ; und

e) Gashohlräumen, die praktisch ausschliesslich geschlossene Zellen derselben Grössenordnung aufweisen,

wobei man die Rohmaterialien zu einem Mehl vermahlt, dieses mit einem in der Wärme Gas entwickelnden organischen Blähmittel vermischt, aus dem Gemisch ein Rohgranulat mit einem Korndurchmesser von 0,1 bis 1,5 mm formt und dieses in einem Schwebe- oder Vibrationsofen während 5 bis 180 Sekunden auf 600 bis 900 °C erhitzt, wobei das erhaltene Schaumglas-Granulat aus dem Ofen entfernt wird, bevor sich die bei der Blähung primär entstehenden kleinen Gashohlräume in wesentlichem Ausmasse zu grösseren Gashohlräumen zusammenschliessen können.

Das mit dem erfindungsgemässen Verfahren hergestellte Schaumglas-Granulat kann neben Glas als Beimengungen bis zu 85 Gew.-% Bims, Lava und/oder Tuff enthalten.

Gegenüber dem aus den eingangs erwähnten CH-A 426 601 und 473 741 und US-A 3 321 414 bekannten Verfahren unterscheidet sich das erfindungsgemässe Verfahren zunächst einmal durch eine kürzere Dauer der Wärmebehandlung, dann aber insbesondere durch die schnelle Entfernung des erhaltenen Schaumglas-Granulates aus dem Ofen.

Glasmehl stellt man zweckmässigerweise durch Niederschmelzen von Glasabfällen her, wobei die Schmelze zu Glasfasern zerblasen wird und die erhaltenen Glasfasern anschliessend gemahlen werden.

Als Blähmittel verwendet man zweckmässigerweise eine kolloidale Dispersion, welche Wasser, Wasserglas und eine in Wasserglas lösliche Kohlenwasserstoffverbindung, vorzugsweise ausserdem einen Alkalibentonit, insbesondere Natriumbentonit, enthält (vgl. EP-A 0 011 597).

Bei der Durchführung des erfindungsgemässen Verfahrens geht man zweckmässigerweise so vor, dass man die Rohkörner zusammen mit einem Trennmittel, beispielsweise Aluminiumoxyd, Hüttentonerde, hochfeuerfesten Tonen, Bentonit oder einer Mischung von Bentonit mit feuerfester Feintonerde, in einem Ofen oder auf einem Trockenband auf 450 bis 650 °C vorerwärmt und anschliessend im Schwebe- oder Vibrationsofen bläht. Das Blähen kann insbesondere auch in einem durch Vibratoren schwingend gehaltenen Drehrohrofen erfolgen.

Bei den bisher bekannten Verfahren entstanden bei der Blähung von natürlichen und künstlichen Silikaten, insbesondere Gläsern, sowie Tonen, welche vorzugsweise in Drehrohröfen mit geringer Temperaturänderungsgeschwindigkeit vorgenommen wurde, Granulate, bei denen die sich bei der Blähung zunächst bildenden gleichmässig verteilten kleinen Gashohlräume im weiteren Verlauf der Blähung in grössere Gashohlräume übergehen, wobei in den stehenbleibenden Stegen die Gashohlräume erhalten bleiben. Diese Art Hohlraumbildung kann auch in der Natur bei Vulkanerden, welche aus erkaltetem Magmen entstanden sind, festgestellt werden.

Beim Blähen bildet sich das im flüssigen bzw. teigigen Zustand befindliche, aus Gashohlräumen und homogenem Material zusammengesetzte Blähgut mindestens zum Teil zu einem gleichmässigen Polyederschaum mit dünnen Zellwänden um, wo im Fortgang der Blähung dann ganze Polyederschaum-Bezirke in grosse Gashohlräume mit dickeren Zellwänden, welche Mikrogashohlräume enthalten, übergehen.

Beim erfindungsgemässen Verfahren wird nun die Blähung nach der in der Anfangsphase erzielten gleichmässigen Gashohlraumbildung, während welcher sich auch eine mindestens annähernd gleichmässige Polyeder-Zellaufbaustruktur herausgebildet hat, abgebrochen, so dass das Entstehen von grösseren Gashohlräumen, welche die Festigkeit stark herabsetzen würden, verhindert wird. Dadurch bleibt die ideale Gleichgewichtsstruktur, bei der drei Lamellen längs einer Kante zusammenlaufen, wobei je zwei von ihnen einen Winkel von 120 °C bilden, mindestens grösstenteils erhalten.

Dieser Zustand kann insbesondere dann erzielt, werden, wenn das Rohgranulat durch einen relativ kurzen Wärmestoss gebläht und das geblähte Granulat anschliessend langsam erkalten gelassen wird.

Es ist angezeigt, mit zunehmender Korngrösse des Rohgranulates die Blähung innerhalb des angegebenen Zeit-/Temperaturbereiches bei längeren Verweilzeiten aber niedrigeren Temperaturen durchzuführen.

## Beispiel

### A. Glasmehl

Glasabfälle werden geschmolzen. Die Schmelze wird zu Glasfasern zerblasen, und diese werden zu einem feinen Glasmehl gemahlen.

### B. Hilfsmittel

Man stellt die nachstehend beschriebene Paste her, welche einerseits beim nachfolgenden Granulieren als Bindemittel für das Glasmehl, andererseits beim späteren Blähen des Rohgranulates als Flussmittel und Blähmittel wirkt.

100 Gewichtsteile Wasser
32 Gewichtsteile Wasserglas
4 Gewichtsteile Glycerin
15 Gewichtsteile Natriumbentonit

werden zu einer dünnflüssigen Paste verrührt.

### C. Rohgranulat

Die nach B. erhaltene Paste wird zu 500 Gewichtsteilen des nach A. erhaltenen Glasmehls zugegeben und mit diesem innig vermischt.

Aus der so erhaltenen Masse wird in einem Granulator ein Rohgranulat mit einer Korngrösse von ca. 1 mm geformt. Anschliessend wird das feuchte Granulat auf einem Trockenband bei ca. 600 °C getrocknet. Dabei tritt noch keine Blähung auf, und es wird die Blähkraft des Blähmittels auch nicht beeinträchtigt.

Durch die bei der Trocknung stattfindende Vorwärmung auf die erwähnte hohe Temperatur wird auch die Durchsatzleistung des Blähofens bei der anschliessenden Blähung gesteigert.

### D. Blähung

Die Blähung des nach C. vorgewärmten Rohgranulates erfolgt in einem Vibrations-Drehrohrofen bei ca 700 °C unter Verwendung von feinpulverigem Aluminiumoxyd als Trennmittel, wobei die Ofenwände und das Trennmittel eine rund 50 °C höhere Temperatur aufweisen.

Um den Wirkungsgrad der Ofenanlage zu verbessern, wird das heisse Trennmittel in einem Kreislauf der Ofenaufgabeseite wieder zugeführt.

Das austretende geblähte Schaumglasgranulat, das eine Korngrösse von ca. 2 mm aufweist, wird auf einem Abkühlband langsam abgekühlt.

## Patentansprüche

1. Verfahren zur Herstellung eines Schaumglas-Granulates mit

a) einer Korngrösse von 0,2 bis 3 mm;

b) $10^6$ bis $10^7$ Gashohlräumen pro cm³ Granulatmasse;

c) einem Schüttgewicht von 100 bis 500 g/Liter;

d) einem Durchmesser der grössten Gashohlräume von im wesentlichen kleiner als 0,1 mm; und

e) Gashohlräumen, die praktisch ausschliesslich geschlossene Zellen derselben Grössenordnung aufweisen,
wobei man die Rohmaterialien zu einem Mehl vermahlt, dieses mit einem in der Wärme Gas entwickelnden organischen Blähmittel vermischt, aus dem Gemisch ein Rohgranulat mit einem Korndurchmesser von 0,1 bis 1,5 mm formt und dieses in einem Schwebe- oder Vibrationsofen während 5 bis 180 Sekunden auf 600 bis 900 °C erhitzt, wobei das erhaltene Schaumglas-Granulat aus dem Ofen entfernt wird, bevor sich die bei der Blähung primär entstehenden kleinen Gashohlräume in wesentlichem Ausmasse zu grösseren Gashohlräumen zusammenschliessen können.

2. Verfahren nach Anspruch 1, dadurch gekennzeichnet, dass man das Rohgranulat vor der Blähung bei ca. 600 °C vortrocknet.

3. Verfahren nach Anspruch 1 oder 2, dadurch gekennzeichnet, dass man ein Schaumglas-Granulat herstellt, das neben Glas als Beimengungen bis zu 85 Gew.-% Bims, Lava und/oder Tuff enthält.

## Claims

1. Process for producing a granulated glass foam which comprises

a) a granulometry of 0.2 to 3 mm;

b) $10^6$ to $10^7$ cavities per cm$^3$ ;

c) a bulk density of 100 to 500 g/liter ;

d) a diameter of the largest cavities being essentially smaller than 0.1 mm ; and

e) as cavities essentially exclusively closed cells of the same order of magnitude whereby the raw materials are ground down to a powder, that this powder is mixed with an organic blowing agent releasing gas in the heat, that granules having a diameter of 0.1 to 1.5 mm are formed from this mixture, and that these granules are heated in a fluidized bed furnace or a vibrating furnace for 5 to 180 seconds to 600 to 900 °C, whereby the obtained granulated glass foam is removed from the furnace before the small cavities primarily formed by the blowing had time to combine into larger cavities to a considerable extent.

2. Process as claimed in claim 1, characterized in that the raw granules are pre-dryed at about 600 °C before blowing.

3. Process as claimed in claim 1 or 2, characterized in that a granulated glass foam is produced which contains, besides glass, in addition up to 85 % by weight of pumice, lava and/or tuff.

**Revendications**

1. Procédé de production de granulés de verre mousse comprenant

a) une granulométrie de 0,2 à 3 mm ;

b) $10^6$ à $10^7$ pores/cm$^3$ de granulés ;

c) un poids apparent de 100 à 500 g/litre ;

d) un diamètre des pores les plus grands sensiblement inférieur à 0,1 mm ; et

e) des pores étant en pratique exclusivement des cellules du même ordre de grandeur où le procédé consiste à broyer la matière première pour en faire une poudre, à la mélanger avec un agent porogène organique qui dégage du gaz à la chaleur, à former à l'aide du mélange des granulés bruts ayant une granulométrie de 0,1 à 1,5 mm et à les porter par chauffage à une température de 600 à 900 °C en 5 à 180 secondes dans un four à lit flottant ou à vibration, les granulés obtenus de verre mousse étant ensuite enlevés du four avant que les petits pores produits initialement lors du gonflement ne puissent se refermer dans une large mesure en formant des grands pores.

2. Procédé selon la revendication 1, caractérisé en ce qu'il consiste par ailleurs à procéder à un séchage initial des granulés bruts à environ 600 °C avant le gonflement.

3. Procédé selon la revendication 1 ou 2, caractérisé en ce qu'on prépare des granulés de verre mousse qui contiennent, en plus de verre, jusqu'à 85 % en poids de pierre ponce, de lave et/ou de tuf à titre des additions.